(19) Europäisches Patentamt
European Patent Office
Office européen des brevets

(11)  EP 1 260 848 B1

(12)  EUROPÄISCHE PATENTSCHRIFT

(45) Veröffentlichungstag und Bekanntmachung des Hinweises auf die Patenterteilung:
**20.07.2005  Patentblatt 2005/29**

(51) Int Cl.⁷: **G02B 27/10**, H01L 31/00, G02B 21/00

(21) Anmeldenummer: **02100561.6**

(22) Anmeldetag: **24.05.2002**

(54) **Vorrichtung zur Ermittlung einer Lichtleistung, Mikroskop und Verfahren zur Mikroskopie**

Arrangement for the determination of luminous power, microscope and microscopy method

Dispositif pour la détermination d'une efficacité lumineuse, microscope et méthode de microscopie

(84) Benannte Vertragsstaaten:
**DE FR GB**

(30) Priorität: **25.05.2001  DE 10125469**

(43) Veröffentlichungstag der Anmeldung:
**27.11.2002  Patentblatt 2002/48**

(73) Patentinhaber: **Leica Microsystems Heidelberg GmbH**
**68165 Mannheim (DE)**

(72) Erfinder:
• **ULRICH, Heinrich**
**69121 Heidelberg (DE)**
• **BIRK, Holger, Dr.**
**74909 Meckesheim (DE)**
• **HAY, William**
**64646 Heppenheim (DE)**
• **NISSLE, Holger**
**69115 Heidelberg (DE)**

(74) Vertreter: **Reichert, Werner F., Dr.**
**Leica Microsystems AG,**
**Corporate Patents + Trademarks Department,**
**Ernst-Leitz-Strasse 17-37**
**35578 Wetzlar (DE)**

(56) Entgegenhaltungen:
EP-A- 0 283 002          CH-A- 651 939
US-A- 5 568 317          US-A- 6 028 708

• PATENT ABSTRACTS OF JAPAN vol. 017, no. 112 (P-1498), 8. März 1993 (1993-03-08) & JP 04 301236 A (CANON INC), 23. Oktober 1992 (1992-10-23)
• G.J. BRAKENHOFF: "Imaging modes in confocal scanning light microscopy (CSLM)" JOURNAL OF MICROSCOPY, Bd. 117, Nr. 2, November 1979 (1979-11), Seiten 233-242, XP001090819
• PATENT ABSTRACTS OF JAPAN vol. 005, no. 005 (P-044), 14. Januar 1981 (1981-01-14) & JP 55 137508 A (MATSUSHITA ELECTRIC IND CO LTD), 27. Oktober 1980 (1980-10-27)

**Beschreibung**

Die Erfindung betrifft eine Vorrichtung zur Ermittlung der Lichtleistung eines Lichtstrahles mit einem Strahlteiler und einem dem Strahlteiler zugeordnetem Detektor) wobei der Strahlteiler Messlicht aus dem Lichtstrahl abspaltet und dem Detektor zuführt und wobei der Strahlteiler und der Detektor zu einer Einheit zusammengefasst sind.

Weiterhin betrifft die Erfindung ein Mikroskop mit einer Lichtquelle, die einen Beleuchtungslichtstrahl zur Beleuchtung einer Probe emittiert, mit mindestens einer Detektorvorrichtung zur Detektion des von der Probe ausgehenden Detektionslichtes (61) und einer Vorrichtung zur Ermittlung der Lichtleistung eines Beleuchtungslichtstrahl mit einem Strahlteiler und einem dem Strahlteiler zugeordnetem Detektor, wobei der Strahlteiler Messlicht aus dem Beleuchtungslichtstrahl (37) abspaltet und dem Detektor (11) zuführt.

Außerdem betrifft die Erfindung ein Verfahren zur Mikroskopie.

Zur Messung der Leistung eines Lichtstrahles ist es allgemein üblich, einen Messstrahl aus dem Lichtstrahl mit einem Strahlteiler abzuteilen und mit Hilfe eines Detektors, der ein zur Leistung des Messstrahles proportionales elektrisches Signal erzeugt, zunächst die Leistung des Messstrahles zu ermitteln, um anschließend bei Kenntnis des Teilungsverhältnisses des Strahlteilers auf die Leistung des Lichtstrahles zu schließen. Aus der Offenlegungsschrift DE 197 02 753 A1 ist eine Anordnung zur Überwachung der in einen Scankopf eingekoppelten Laserstrahlung, mittels eines Detektionselementes, auf das ein Teil der eingekoppelten Strahlung über einen Strahlteiler gelenkt wird, bekannt.

Aus JP 04301236 ist eine optische Vorrichtung bekannt, die die Leistung des von einem Halbleiterlaser emittieren Lichtes mit Hilfe einer Regelschleife konstant hält. Die Vorrichtung beinhaltet einen Strahlteiler, der Messlicht aus dem von dem Halbleiterlaser emittieren Licht abspaltet und einen unmittelbar am Strahlteiler angeordneten Detektor, der das Messlicht empfängt.

Anordnungen der genannten Art erreichen nur eine begrenzte Genauigkeit und Reproduzierbarkeit. Sie sind u.a. anfällig gegen äußere Störungen, insbesondere gegen Vibrationen und thermische Einflüsse.

In der Scanmikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahles wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet. Ein konfokales Rastermikroskop umfasst im allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so daß man eine Punktinformation erhält, die durch sequentielles Abtasten des Objekts mit dem Fokus des Beleuchtungslichtstrahles zu einem dreidimensionalen Bild führt. Meist wird ein dreidimensionales Bild durch schichtweise Bilddatennahme erzielt. Kommerzielle Scanmikroskope bestehen meist aus einem Scanmodul, dass an das Stativ eines klassischen Lichtmikroskops angeflanscht wird, wobei das Scanmodul alle genannten zur Abrasterung einer Probe zusätzlich nötigen Elemente beinhaltet.

Eine bekannte Methode, Schwankungen und Fluktuationen der Beleuchtungslichtleistung auszugleichen bzw. zu korrigieren, beruht darauf, mit Hilfe eines Strahlteilers von dem Beleuchtungslichtstrahl einen Messstrahl abzuteilen und zur Bilderzeugung oder zur Bildberechnung das Verhältnis der gemessenen Leistungen von Messstrahl und Detektionslichtstrahl zu verwenden. Diese Vorgehensweise ist beispielsweise in der Veröffentlichung G.J. Brakenhoff, Journal of Microscopy, Vol. 117, Pt 2, November 1979, S. 233-242 offenbart.

In der bereits erwähnten Offenlegungsschrift DE 197 02 753 A1 ist weiterhin offenbart, dass in der Scanmikroskopie durch Bildung von Signalquotienten oder durch Signalsubtraktion eines Detektionssignales und eines Monitorsignales eine Rauschverminderung bewirkt wird und Intensitätsfluktuationen verringerbar sind. Die bekannten Mikroskope erreichen jedoch auf Grund der bereits angeführten begrenzten Genauigkeit und Reproduzierbarkeit der Leistungsmessung nur eine grobe Kompensation von Schwankungen des Beleuchtungslichtes.

Der Erfindung liegt daher die Aufgabe zugrunde eine Vorrichtung vorzuschlagen, die eine weitgehend genaue und reproduzierbare Ermittlung der Lichtleistung eines Lichtstrahles ermöglicht.

Diese Aufgabe wird durch eine Vorrichtung nach Anspruch 1 gelöst, die dadurch gekennzeichnet ist, dass im Strahlengang des Messlichts ein streuendes optisches Element, wie eine aufgeraute Glasplatte oder eine Milchglasscheibe, vorgesehen ist, damit der Detektor das Messlicht mit verringerter räumlicher und/oder zeitlicher Kohärenz empfängt.

Es ist außerdem Aufgabe der Erfindung, ein Mikroskop anzugeben, das eine zuverlässige und verbesserte Vermeidung und/oder Kompensation von Schwankungen oder Fluktuationen der Beleuchtungslichtleistung ermöglicht.

Diese Aufgabe wird durch ein Mikroskop nach Anspruch 8 gelöst, das dadurch gekennzeichnet ist, dass der Strahlteiler (1) und der Detektor (11) zu einer Einheit zusammengefasst sind und dass im Strahlengang des Messlichts ein streuendes optisches Element, wie eine aufgeraute Glasplatte oder eine Milchglasscheibe, vorgesehen ist, damit der Detektor das Messlicht mit verringerter räumlicher und/oder zeitlicher Kohärenz empfängt.

Außerdem ist es Aufgabe der Erfindung, ein Verfahren zur Mikroskopie anzugeben, das ein effiziente, zuverlässige und weitgehend genaue Kompensation von Schwankungen oder Fluktuationen der Beleuchtungslichtleistung ermöglicht.

Diese Aufgabe wird durch ein Verfahren nach Anspruch 15 gelöst, das durch folgende Schritte gekennzeichnet ist:

- Ermitteln einer Lichtleistung eines Beleuchtungslichtstrahles (37) mit einer Vorrichtung, die einen Strahlteiler (1) und einem dem Strahlteiler (1) zugeordnetem Detektor (11) umfasst, wobei der Strahlteiler (1) Messlicht (23) aus dem Beleuchtungslichtstrahl (37) abspaltet und dem Detektor (11) zuführt und dass im Strahlengang des Messlichts ein streuendes optisches Element, wie eine aufgerauhte Glasplatte oder eine Milchglasscheibe, vorgesehen ist, damit der Detektor das Messlicht mit verringerter räumlicher und/oder zeitlicher Kohärenz empfängt.

- Ermitteln einer Lichtleistung eines von einer Probe ausgehenden Detektionslichtstrahles und

- Ermitteln einer korrigierten Lichtleistung durch Verrechnen der Lichtleistung des Beleuchtungslichtstrahles und der Lichtleistung des Detektionslichtstrahles.

Die Erfindung hat den Vorteil, dass eine zuverlässige Messung der Lichtleistung eines Lichtstrahles ermöglicht ist. Weiterhin hat die Erfindung den Vorteil einer zuverlässigen, störungsunanfälligen und weitgehend genauen Kompensation von Lichtleistungsschwankungen, insbesondere von Schwankungen des Beleuchtungslichtes zur Beleuchtung einer Probe in der Mikroskopie und in der Scanmikroskopie.

Erfindungsgemäß wurde erkannt, dass die bekannten Ungenauigkeiten und die unbefriedigende Reproduzierbarkeit bekannter Vorrichtungen zur Messung der Lichtleistung eines Lichtstrahles unter anderem auf Interferenzen innerhalb des Messlichts zurückzuführen sind, die schon bei geringsten mechanischen oder thermischen Störungen zu großen Schwankungen der gemessenen Lichtleistung führen. Auf Grund dieser Nachteile sind einer genauen Kompensation von Schwankungen der Beleuchtungslichtleistung oder einer Stabilisierung der Beleuchtungslichtleistung in einem Mikroskop Grenzen gesetzt.

In einer bevorzugen Ausgestaltung empfängt der Detektor das Messlicht mit verringerter räumlicher und/oder zeitlicher Kohärenz. Hierzu ist im Strahlengang des Messlichts ein streuendes optisches Element, wie eine aufgeraute Glasplatte oder eine Milchglasscheibe, vorgesehen. In einer besonders bevorzugten Ausführungsform umfasst der Strahlteiler ein Substrat, das eine diffus streuende Fläche aufweist oder das zumindest teilweise aus Milchglas besteht.

Besonders vorteilhaft ist eine Ausführungsvariante bei der der Detektor unmittelbar hinter dem Strahlteiler angeordnet ist. Diese Variante ist besonders unanfällig gegen äußere Einflüsse, störunanfällig und kompakt. Oft entstehen durch Mehrfachreflexionen im Strahlteiler mehrere interferenzfähige Teilstrahlen, insbesondere an den beschichteten und unbeschichteten Grenzflächen. Der Detektor ist daher vorteilhafter Weise derart angeordnet, dass er nur vom primär abgeteilten Messlicht, jedoch nicht von anderen Teillichtstrahlen, beleuchtet ist. In einer weiteren vorteilhaften Ausgestaltung dient das Eintrittsfenster des Detektors selbst, das vorzugsweise teilreflektierend beschichtet ist, als Strahlteiler.

Der Strahlteiler besteht in einer bevorzugten Ausgestaltung aus einem Substrat, das eine teilreflektierende Beschichtung aufweist. Vorzugsweise handelt es sich hierbei um eine metallische oder dielektrische Beschichtung. In einer anderen bevorzugten Ausführung ist die Beschichtung direkt auf dem Detektor oder auf dem Eintrittsfenster des Detektorgehäuses aufgebracht. Der Strahlteiler bzw. die Beschichtung ist in einer bevorzugen Ausgestaltungsvariante derart ausgeführt, dass das Verhältnis der Lichtleistungen des Lichtstrahles zu der am Detektor gemessenen Lichtleistung des Messlichtes weitgehend unabhängig von der Wellenlänge des Lichtstrahles ist.

In einer weiteren Ausgestaltung sind der Strahlteiler (1) und der Detektor (11) zu einer Einheit zusammengefasst, die ein Gehäuse aufweist.

Ganz besonders bevorzugt ist eine Ausführungsform mit einem Strahlteiler, der einen transmittierten und einen reflektierten Teilstrahl erzeugt und ausschließlich der transmittierte Teilsstrahl als Messstrahl auf den Detektor trifft. Der reflektierte Teilstrahl wird als Beleuchtungslichtstrahl auf eine Probe gelenkt.

In einer weiteren Ausgestaltung ist das Mikroskop ein Scanmikroskop oder ein konfokales Scanmikroskop, das vorzugsweise eine Verarbeitungseinheit, die die gemessene Leistung des Messlicht unter Berücksichtigung des Teilungsverhältnisses des Strahlteilers und anderer Systemparameter mit der Leistung des Detektionslichtes oder eines Teils, beispielsweise der Leistung eines Teils des Detektionslichtes aus einem bestimmten Spektralbereich, verrechnet. Durch Ermittlung einer korrigierten Lichtleistung werden Fluktuationen der Leistung des Beleuchtungslichtes korrigiert. Ganz besonders vorteilhaft ist eine Ausführung, bei der Offsets, die beispielsweise durch den Dunkelstrom von Detektoren verursacht sind, vor dem Abscannen ermittelbar und somit bei der Verrechnung berücksichtigbar sind. In einer bevorzugen Ausgestaltung ist eine Verarbeitungseinheit vorgesehen, die eine programmierbare Digitalelektronik, beispielsweise FPGA (Field Programmable Gate Arrray), umfasst.

Zum Ermitteln der Leistung des Messlichts ist vorzugsweise ein Halbleiterdetektor, wie eine Photodiode oder Avalanche- oder PIN-Diode, ein CCD-Chip oder ein Photodetektor vorgesehen, da Halbleiterdetektoren eine besonders kleine Bauform aufweisen. Auch Photomultiplier oder Photomultiplierarrays sind einsetzbar.

Die Verrechung der Leistung P des Detektionslichtstrahles mit der Leistung M des Messlichts unter Berücksichtigung des Offsets $P_0$ des Detektors zur Messung der Leistung des Detektionslichtes und des Offsets $M_0$ des Detektors zur Messung der Leistung des Messlichtes erfolgt vorzugsweise nach der folgenden Formel:

$$M_{korr} = \frac{P - P_0}{M - M_0} \, (\overline{M} - M_0).$$

wobei $\overline{M}$ vorzugsweise die über ein Bild, eine Bildzeile oder über auswählbare Rasterpunkte gemittelte Detektionslichtleistung ist.

Hierbei ist insbesondere die Berücksichtigung der Offsets von besonderem Vorteil, denn bei einer reinen Verhältnisbildung aus Detektionslichtleistung Leistung des Messlichts kürzen sich selbst zeitlich konstante Offsetanteile nicht heraus. Offsets können von den Detektoren herrühren, beispielsweise bei unkorrektem Nullabgleich oder sie können durch Streu- oder Umgebungslicht, das ungewollt zu den Detektoren gelangt, verursacht sein. Die Offsets werden in einer besonderen Ausgestaltungsform eines Scanmikroskops vor dem Abscannen eines Bildes automatisch ermittelt. Hierzu wird das Beleuchtungslicht unterbrochen und die von den Detektoren ausgehenden Signale gemessen und gespeichert. Mit einem Skalierungsschritt, der im einfachsten Fall die Multiplikation mit einer Konstanten umfasst, wird die korrigierte Lichtleistung an jede beliebige Skala anpassbar.

Das erfindungsgemäße Verfahren umfasst in den beiden ersten Schritten das Ermitteln einer Lichtleistung eines Beleuchtungslichtstrahls mit einer Vorrichtung, die einen Strahlteiler(1) und einem dem Strahlteiler (1) zugeordnetem Detektor (11) umfasst, wobei der Strahlteiler (1) Messlicht (23) aus dem Beleuchtungslichtstrahl (37) abspaltet und dem Detektor (11) zuführt und das Verhältnis der Lichtleistung des Beleuchtungslichtstrahl (37) zu der am Detektor (11) gemessenen Lichtleistung des Messlichts (23) zeitlich konstant ist, und das Ermitteln der Lichtleistung eines von einer Probe ausgehenden Detektionslichtstrahles. Vorzugsweise werden beide Lichtleistungen mit Hilfe von Detektoren gewonnen, die zur jeweiligen Lichtleistung proportionale elektrische Signale erzeugen. Die Signale werden in einer Ausgestaltung digitalisiert und in einer FPGA-Einheit oder in einem PC miteinander verrechnet und so eine korrigierte Detektionslichtleistung ermittelt, die zur Bilderzeugung bzw. zur Bildberechung verwendbar ist. In einer anderen Ausgestaltung erfolgt die Verrechnung der Signale analog.

In einer anderen Ausgestaltungsvariante erfolgt das Ermitteln der Lichtleistung des Beleuchtungslichtstrahles und des Detektionslichtstrahles simultan.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:

Fig. 1    eine bekannte Vorrichtung zur Lichtleistungsmessung,

Fig. 2    eine erfindungsgemäße Vorrichtung zur Ermittlung der Lichtleistung eines Lichtstrahles,

Fig. 3    eine weitere erfindungsgemäße Vorrichtung zur Ermittlung der Lichtleistung eines Lichtstrahles,

Fig. 4    ein erfindungsgemäßes Mikroskop,

Fig. 5    ein weiteres erfindungsgemäßes Mikroskop und

Fig. 6    ein weiteres erfindungsgemäßes Mikroskop.

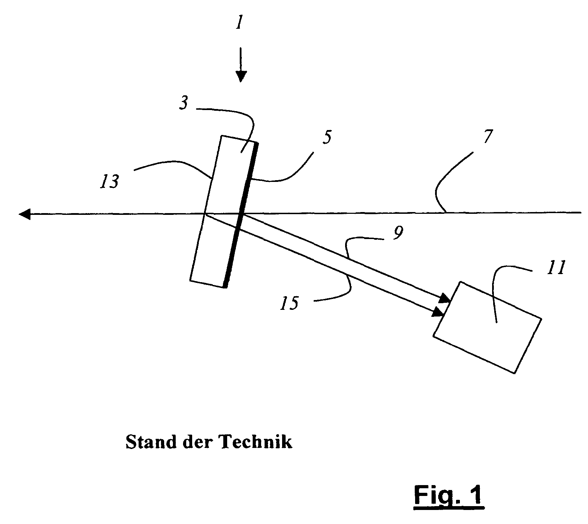

Fig. 1 zeigt eine Vorrichtung zur Lichtleistungsmessung nach dem Stand der Technik. Die Vorrichtung umfasst einen Strahlteiler 1, der aus einem Substrat 3 mit einer teilreflektierenden Beschichtung 5 besteht. Auf den Strahlteiler 1 trifft der einfallende Lichtstrahl 7. An der Beschichtung 5 wird durch Reflexion Messlicht 9 abgespalten, das auf den in einem Abstand von ca. 3 cm angeordneten Detektor 11 trifft. Das Teilungsverhältnis beträgt ca. 50:1. Der durch die Beschichtung tretende Teil der Lichtstrahles 7 erfährt an der unbeschichteten Grenzfläche 13 des Substrates 3 eine weitere -ungewollte-Abspaltung. Weiteres Messlicht 15, dessen Leistung ca. 4% der Leistung des durch die Beschichtung getretenen Teils des Lichtstrahles 7 beträgt, wird an der Grenzfläche 13 zum Detektor 11 reflektiert. Das an der Beschichtung abgespaltene Messlicht 9 interferiert am Detektor mit dem an der unbeschichteten Grenzfläche 13 des Substrates 3 abgespaltenen Messlicht 15. Schon geringste Variationen der optischen Weglänge zwischen dem Strahlteiler 1 und dem Detektor 11 sowie im Substrat 3, beispielsweise durch Temperaturänderungen, Luftdruckschwankungen oder Vibrationen, führen zu einer Änderung der Interferenz, die sich in einer großen Variation der gemessenen Lichtleistung niederschlägt.

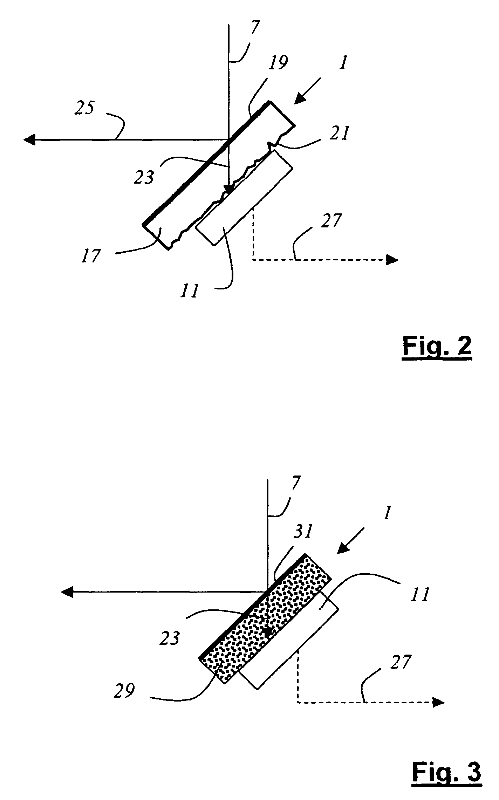

Fig. 2 zeigt eine erfindungsgemäße Vorrichtung zur Ermittlung der Lichtleistung eines Lichtstrahles 7. Die Vorrichtung umfasst einen Strahlteiler 1 mit einem Substrat 17, das eine glatte Oberfläche mit einer teildurchlässigen, metallischen Beschichtung 19 und eine aufgeraute, diffus streuende Fläche 21 aufweist. Unmittelbar auf die aufgeraute Fläche 21 des Substrates 17 ist ein Detektor 11, der als Photodiode ausgeführt ist, aufgekittet. Der auf den Strahlteiler 1 treffende Lichtstrahl 7 wird in transmittiertes Messlicht 23 und einen reflektierten Teilstrahl 25 im Verhältnis 1:40 geteilt. Durch die aufgeraute Fläche 21 ist die Interferenzfähigkeit des auf den Detektor 11 treffenden Lichtes weitgehend zerstört. Die Vorrichtung ist auf Grund der kleinen Bauform äußerst unanfällig gegen äußere Störungen. Der Detektor erzeugt ein zur Leistung des auftreffenden Messlichtes 23 proportionales elektrisches Signal, das über sie Leitung 27 einer Verarbeitungseinheit zuführbar ist

Fig. 3 zeigt eine weitere erfindungsgemäße Vorrichtung zur Ermittlung der Lichtleistung eines Lichtstrahles. Die Vorrichtung beinhaltet einen Strahlteiler 1, der ein Substrat aus Milchglas 29 und eine teilreflektierende, dielektrische Beschichtung 31. aufweist. Der auf die Beschichtung treffende Lichtstrahl 7 wird zu 97% reflektiert. Das durch die Beschichtung tretende Messlicht 23 wird im Substrat aus Milchglas 29 aufgestreut und erreicht den Detektor 11 mit weitgehend zerstörter Interferenzfähigkeit. Der Detektor erzeugt ein zur Leistung des auftreffenden Messlichts 23 proportionales elektrisches Signal, das über sie Leitung 27 einer Verarbeitungseinheit zuführbar ist.

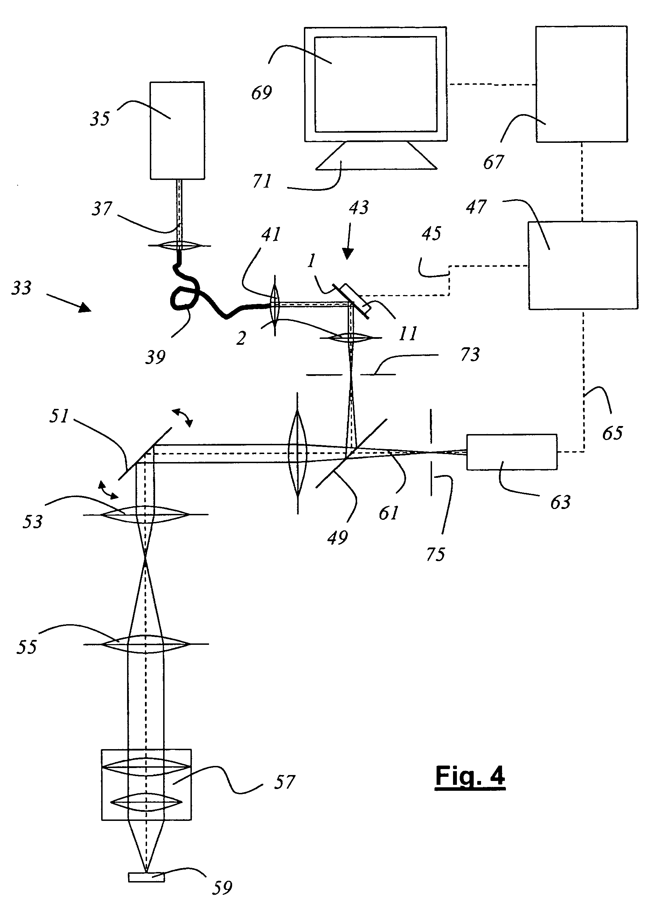

Fig. 4 zeigt schematisch ein erfindungsgemäßes Mikroskop 33, das als konfokales Scanmikroskop ausgeführt ist. Der von einem Beleuchtungssystem 35 kommende Beleuchtungslichtstrahl 37 wird über eine Glasfaser 39 transportiert und trifft nach der Auskopplung aus der Glasfaser 39 mit Hilfe der Optik 41 auf eine Vorrichtung 43 zur Ermittlung der Leistung des Beleuchtungslichtstrahles, die mit einem Strahlteiler 1 einen Messstrahl aus dem Beleuchtungslichtstrahl abteilt und dem Detektor 11 zuführt. Der Strahlteiler 1 beinhaltet ein Substrat aus Milchglas. Der Detektor 11 erzeugt ein zur Leistung des Messlichts proportionales elektrisches Signal, das über die Leitung 45 an die Verarbeitungseinheit 47 geleitet wird. Über einen Strahlteiler 49 gelangt der Beleuchtungslichtstrahl 37 zum kardanisch aufgehängten Scanspiegel 51, der den Strahl durch die Scanoptik 53, die Tubusoptik 55 und das Objektiv 57 hindurch über bzw. durch die Probe 59 führt. Der Beleuchtungslichtstrahl 37 wird bei nicht transparenten Proben 59 über die Probenoberfläche geführt. Bei biologischen Proben 59 (Präparaten) oder transparenten Proben kann der Beleuchtungslichtstrahl 37 auch durch die Probe 59 geführt werden. Dies bedeutet, dass aus verschiedenen Fokusebenen des Objekts nacheinander durch den Beleuchtungslichtstrahl 37 abgetastet werden. Die nachträgliche Zusammensetzung ergibt dann ein dreidimensionales Bild der Probe. Das von der Probe ausgehende Detektionslicht 61 gelangt durch das Objektiv 57, die Tubusoptik 55 und die Scanoptik 53 hindurch und über den Scanspiegel 51 zum Strahlteiler 49, passiert diesen und trifft auf eine Detektorvorrichtung 63, die als Photomultiplier ausgeführt ist. In der Detektorvorrichtung 63 werden elektrische, zur Leistung des Detektionslicht proportionale elektrische Detektionssignale erzeugt und über die Leitung 65 an die Verarbeitungseinheit 47 weitergegeben. In der Verarbeitungseinheit 47 werden die eingehenden, Analogsignale zunächst digitalisiert und dann digital miteinander verrechnet und eine korrigierte Detektionslichtleistung ermittelt. Diese wird an einen PC 67 weitergegeben. Der korrigierte Detektionslichtleistung wird anhand eines Positionssignals des kardanisch aufgehängten Spiegels die Position des zugehörigen Rasterpunktes zugeordnet und die Daten aller Rasterpunkte zu einem Abbild der Probe 69 zusammengesetzt, das auf einem Display 71 dargestellt ist. Das bei einem konfokalen Scanmikroskop üblicherweise vorgesehene Beleuchtungspinhole 73 und das Detektionspinhole 75 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

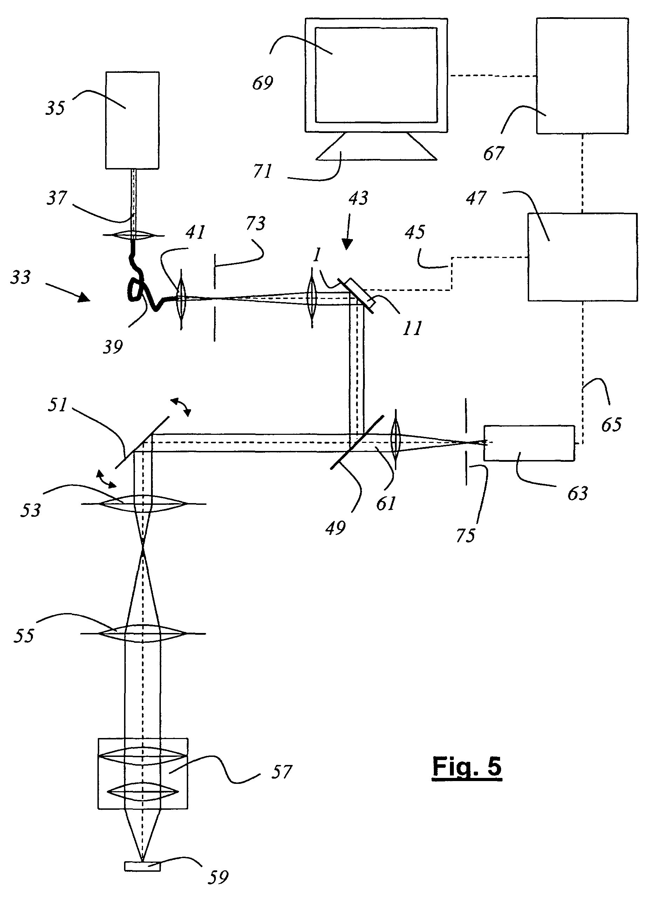

Fig. 5 zeigt schematisch ein weiteres erfindungsgemäßes Mikroskop 33, das als konfokales Scanmikroskop ausgeführt ist. Das dargestellte Mikroskop 33 entspricht weitgehend dem in Fig. 4 gezeigten Mikroskop. Die Vorrichtung 43 zur Ermittlung der Leistung des Beleuchtungslichtstrahles ist in dieser Ausführung zwischen dem Beleuchtungspinhole 73 und dem Strahlteiler 49 angeordnet.

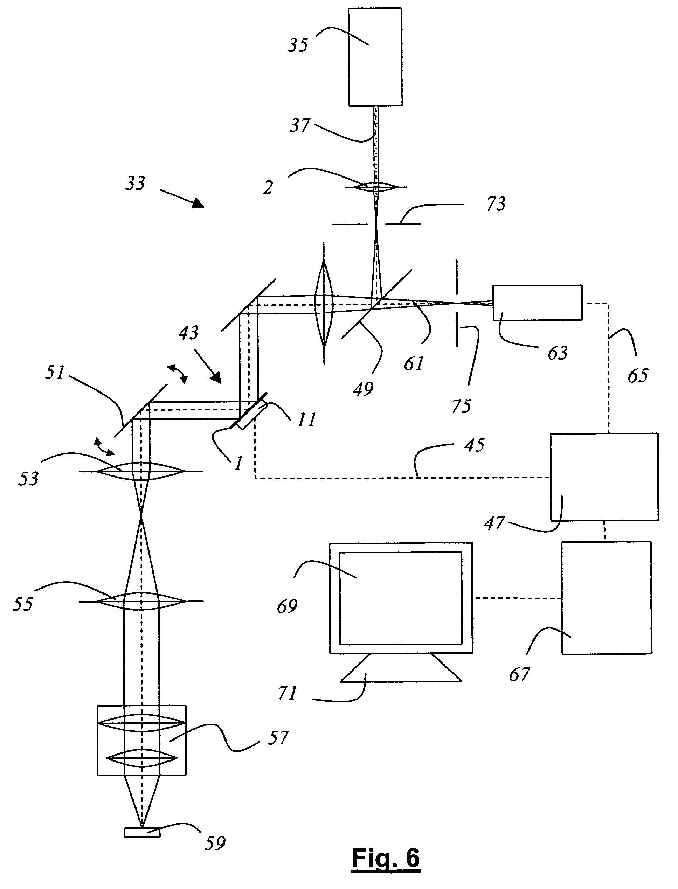

Fig. 6 zeigt schematisch ein weiteres erfindungsgemäßes Mikroskop 33, das als konfokales Scanmikroskop ausgeführt ist. Das dargestellte Mikroskop 33 entspricht weitgehend dem in Fig. 4 gezeigten Mikroskop. Die Vorrichtung 43 zur Ermittlung der Leistung des Beleuchtungslichtstrahles ist in dieser Ausführung zwischen dem kardanisch aufgehängten Scanspiegel 51 und der Scanoptik 53 angeordnet. Das Mikroskop 33 hat den zusätzlichen Vorteil, dass auch Schwankungen der Leistung eines polarisierten Beleuchtungslichtstrahls 37 erfasst werden, die wegen unterschiedlicher Reflexionsgrade des Strahlteilers 49 für unterschiedliche Polarisationsrichtungen, auf Schwankungen der Polarisationsrichtung zurückzuführen sind.

**Patentansprüche**

1. Vorrichtung zur Ermittlung der Lichtleistung eines Lichtstrahles (7) mit einem Strahlteiler (1) und einem dem Strahlteiler (1) zugeordnetem Detektor (11), wobei der Strahlteiler (1) Messlicht (23) aus dem Lichtstrahl (7) abspaltet und dem Detektor (11) zuführt, und wobei der Strahlteiler (1) und der Detektor (11) zu einer Einheit zusammengefasst sind, **dadurch gekennzeichnet, dass** im Strahlengang des Messlichts (23) ein streuendes optisches Element, wie eine aufgeraute Glasplatte (21) oder eine Milchglasscheibe (29), vorgesehen ist, damit der Detektor (11) das Messlicht (23) mit verringerter räumlicher und/oder zeitlicher Kohärenz empfängt.

2. Vorrichtung nach Anspruch 1, **dadurch gekennzeichnet, dass** der Strahlteiler (1) ein Substrat (17, 29), das eine diffus streuende Fläche (21) aufweist oder das zumindest teilweise aus Milchglas (29) besteht, umfasst.

3. Vorrichtung nach einem der Ansprüche 1 oder 2, **dadurch gekennzeichnet, dass** der Detektor (11) unmittelbar hinter dem Strahlteiler (1) angeordnet ist.

4. Vorrichtung nach einem der Ansprüche 2 oder 3, **dadurch gekennzeichnet, dass** der Strahlteiler (1) eine Beschichtung (19, 31) aufweist, die auf dem Substrat (17, 29) aufgebracht ist.

5. Vorrichtung nach Anspruch 4, **dadurch gekennzeichnet, dass** die Beschichtung (19, 31) eine metallische Beschichtung ist.

6. Vorrichtung nach einem der Ansprüche 1 bis 5, **dadurch gekennzeichnet, dass** der Strahlteiler (1) transmittiertes Messlicht (79) und einen reflektierten Teilstrahl (25) erzeugt und ausschließlich das transmittierte Messlicht (79) auf den Detektor (11) trifft.

7. Vorrichtung nach Anspruch 1, **dadurch gekennzeichnet, dass** der Strahlteiler (1) derart ausgebildet ist, dass das Verhältnis der Lichtleistungen des Lichtstrahles (7) und des Messlichtes (23) unabhängig von der Wellenlänge des Lichtstrahles (7) ist.

8. Mikroskop (33) mit einer Lichtquelle, die einen Beleuchtungslichtstrahl (37) zur Beleuchtung einer Probe (59) emittiert, mit mindestens einer Detektorvorrichtung (63) zur Detektion des von der Probe (59) ausgehenden Detektionslichtes (61) und einer Vorrichtung zur Ermittlung der Lichtleistung eines Beleuchtungslichtstrahls (37) mit einem Strahlteiler (1) und einem dem Strahlteiler (1) zugeordnetem Detektor (11), wobei der Strahlteiler (1) Messlicht (23) aus dem Beleuchtungslichtstrahl (37) abspaltet und dem Detektor (11) zuführt, **dadurch gekennzeichnet, dass**, der Strahlteiler (1) und der Detektor (11) zu einer Einheit zusammengefasst sind und dass im Strahlengang des Messlichts (23) ein streuendes optisches Element, wie eine aufgeraute Glasplatte (21) oder eine Milchglasscheibe (29), vorgesehen ist, damit der Detektor (11) das Messlicht (23) mit verringerter räumlicher und/oder zeitlicher Kohärenz empfängt.

9. Mikroshop (33) nach Anspruch 8, **dadurch gekennzeichnet, dass** der Strahlteiler (1) ein Substrat (17, 29), dass eine diffus streuende Fläche (21) aufweist oder das zumindest teilweise aus Milchglas (29) besteht, umfasst.

10. Mikroskop (33) nach einem der Ansprüche 8 oder 9, **dadurch gekennzeichnet, dass** die Einheit ein Gehäuse aufweist.

11. Mikroskop (33) nach einem der Ansprüche 8 bis 10, **dadurch gekennzeichnet, dass** der Detektor (11) unmittelbar hinter dem Strahlteiler (1) angeordnet ist.

12. Mikroskop (33) nach einem der Ansprüche 9 bis 11, **dadurch gekennzeichnet, dass** der Strahlteiler (1) eine Beschichtung (19, 31) aufweist, die auf dem Substrat (17, 29) aufgebracht ist.

13. Mikroskop (33) nach Anspruch 8, **dadurch gekennzeichnet, dass** das Verhältnis der Lichtleistungen des Beleuchtungslichtstrahls (37) und des Messlichtes (23) unabhängig von der Wellenlänge des Beleuchtungslichtstrahls (37) ist.

14. Mikroskop (33) nach einem der Ansprüche 8 bis 13, **dadurch gekennzeichnet, dass** das Mikroskop (33) ein Scanmikroskop oder ein konfokales Scanmikroskop ist.

15. Verfahren zur Mikroskopie **gekennzeichnet durch** folgende Schritte:

   • Ermitteln einer Lichtleistung eines Beleuchtungslichtstrahles (37) mit einer Vorrichtung, die einen Strahlteiler (1) und einem dem Strahlteiler (1) zugeordnetem Detektor (11) umfasst, wobei der Strahlteiler (1) Messlicht (23) aus dem Beleuchtungslichtstrahl (37) abspaltet und dem Detektor (11) zuführt und im Strahlengang des Messlichts (23) ein streuendes optisches Element, wie eine aufgerauhte Glasplatte (21) oder eine Milchglasscheibe (29), vorgesehen ist, damit der Detektor (11) das Messlicht (23) mit verringerter räumlicher und/oder zeitlicher Kohärenz empfängt.

- Ermitteln einer Lichtleistung eines von einer Probe (59) ausgehenden Detektionslichtstrahles und

- Ermitteln einer korrigierten Lichtleistung **durch** Verrechnen der Lichtleistung des Beleuchtungslichtstrahles (37) und der Lichtleistung des Detektionslichtstrahles.

16. Verfahren nach Anspruch 15, **dadurch gekennzeichnet, dass** das Ermitteln der Lichtleistung des Beleuchtungslichtstrahles (37) und des Detektionslichtstrahles simultan erfolgt.

17. Verfahren nach Anspruch 15, **dadurch gekennzeichnet, dass** das Ermitteln der Lichtleistung des Beleuchtungslichtstrahls (37) einen Offsetabgleich umfasst.

18. Verfahren nach Anspruch 15, **dadurch gekennzeichnet, dass** das Ermitteln der Lichtleistung des Detektionslichtstrahles einen Offsetabgleich umfasst.

19. Verfahren nach einem der Ansprüche 15 bis 18, **dadurch gekennzeichnet, dass** das Ermitteln einen Skalierungsschritt umfasst.

**Claims**

1. Device for determining the light power of a light beam (7), having a beam splitter (1) and a detector (11) assigned to the beam splitter (1), the beam splitter (1) splitting measuring light (23) off from the light beam (7) and feeding it to the detector (11), and the beam splitter (1) and the detector (11) being combined to form a unit, **characterized in that** a scattering optical element, such as a roughened glass plate (21) or a milk glass plate (29), is provided in the beam path of the measuring light (23) in order for the detector (11) to receive the measuring light (23) with a reduced spatial and/or temporal coherence.

2. Device according to Claim 1, **characterized in that** the beam splitter (1) comprises a substrate (17, 29) which has a diffusely scattering surface (21), or which consists at least partially of milk glass (29).

3. Device according to either of Claims 1 and 2, **characterized in that** the detector (11) is arranged directly downstream of the beam splitter (1).

4. Device according to either of Claims 2 and 3, **characterized in that** the beam splitter (1) has a coating (19, 31) which is applied to the substrate (17, 29).

5. Device according to Claim 4, **characterized in that** the coating (19, 31) is a metallic coating.

6. Device according to one of Claims 1 to 5, **characterized in that** the beam splitter (1) produces transmitted measuring light (79) and a reflected partial beam (25) and only the transmitted measuring light (79) strikes the detector (11).

7. Device according to Claim 1, **characterized in that** the beam splitter (1) is designed in such a way that the ratio between the light powers of the light beam (7) and the measuring light (23) is independent of the wavelength of the light beam (7).

8. Microscope (33) having a light source which emits an illuminating light beam (37) for illuminating a sample (59) having at least one detector device (63) for detecting the detection light (61) emanating from the sample (59), and having, for the purpose of determining the light power of an illuminating light beam (37), a device with a beam splitter (1) and a detector (11) assigned to the beam splitter (1), the beam splitter (1) splitting measuring light (23) off from the illuminating light beam (37) and feeding it to the detector (11), **characterized in that** the beam splitter (1) and the detector (11) are combined to form a unit, and **in that** a scattering optical element, such as a roughened glass plate (21) or a milk glass plate (29), is provided in the beam path of the measuring light (23) in order for the detector (11) to receive the measuring light (23) with a reduced spatial and/or temporal coherence.

9. Microscope (33) according to Claim 8, **characterized in that** the beam splitter (1) comprises a substrate (17, 29) which has a diffusely scattering surface (21), or which consists at least partially of milk glass (29).

10. Microscope (33) according to either of Claims 8 and 9, **characterized in that** the unit has a housing.

11. Microscope (33) according to one of Claims 8 to 10, **characterized in that** the detector (11) is arranged directly downstream of the beam splitter (1).

12. Microscope (33) according to one of Claims 9 to 11, **characterized in that** the beam splitter (1) has a coating (19, 31) which is applied to the substrate (17, 29).

**13.** Microscope (33) according to Claim 8, **characterized in that** the beam splitter (1) is designed in such a way that the ratio between the light powers of the illuminating light beam (37) and the measuring light (23) is independent of the wavelength of the illuminating light beam (37).

**14.** Microscope (33) according to one of Claims 8 to 13, **characterized in that** the microscope (33) is a scanning microscope or a confocal scanning microscope.

**15.** Method of microscopy, **characterized by** the following steps:

- determining a light power of an illuminating light beam (37) with the aid of a device which comprises a beam splitter (1) and a detector (11) assigned to the beam splitter (1), the beam splitter (11) splitting measuring light (23) off from the illuminating light beam (37) and feeding it to the detector (11), and a scattering optical element, such as a roughened glass plate (21) or a milk glass plate (29), being provided in the beam path of the measuring light (23) in order for the detector (11) to receive the measuring light (23) with a reduced spatial and/or temporal coherence,
- determining a light power of a detection light beam emanating from a sample (59) and
- determining a corrected light power by drawing up the balance between the light power of the illuminating light beam (37) and the light power of the detection light beam.

**16.** Method according to Claim 15, **characterized in that** the light power of the illuminating light beam (37) and that of the detection light beam are determined simultaneously.

**17.** Method according to Claim 15, **characterized in that** an offset adjustment is included when determining the light power of the illuminating light beam (37).

**18.** Method according to Claim 15, **characterized in that** an offset adjustment is included when determining the light power of the detection light beam.

**19.** Method according to one of Claims 15 to 18, **characterized in that** a scaling step is included when making the determination.

**Revendications**

**1.** Dispositif pour déterminer la puissance lumineuse d'un faisceau lumineux (7) avec un séparateur de faisceau (1) et un détecteur (11) associé au séparateur de faisceau (1), le séparateur de faisceau (1) séparant une lumière de mesure (23) du faisceau lumineux (7) et la dirigeant vers le détecteur (11), et le séparateur de faisceau (1) et le détecteur (11) étant réunis en une unité, **caractérisé en ce qu'**un élément optique diffusif, comme une plaque de verre (21) rendue rugueuse ou un disque à verre dépoli (29), est prévu dans la trajectoire du faisceau de la lumière de mesure (23) pour que le détecteur (11) reçoive la lumière de mesure (23) avec une cohérence spatiale et/ou temporelle diminuée.

**2.** Dispositif selon la revendication 1, **caractérisé en ce que** le séparateur de faisceau (1) comprend un substrat (17, 29) qui présente une surface (21) diffusive ou se compose au moins partiellement de verre dépoli (29).

**3.** Dispositif selon l'une quelconque des revendications 1 ou 2, **caractérisé en ce que** le détecteur (11) est disposé directement derrière le séparateur de faisceau (1).

**4.** Dispositif selon l'une quelconque des revendications 2 ou 3, **caractérisé en ce que** le séparateur de faisceau (1) présente un revêtement (19, 31) qui est appliqué sur le substrat (17, 29).

**5.** Dispositif selon la revendication 4, **caractérisé en ce que** le revêtement (19, 31) est un revêtement métallique.

**6.** Dispositif selon l'une quelconque des revendications 1 à 5, **caractérisé en ce que** le séparateur de faisceau (1) produit une lumière de mesure transmise (79) et un faisceau partiel réfléchi (25) et la lumière de mesure transmise (79) est exclusivement incidente sur le détecteur (11).

**7.** Dispositif selon la revendication 1, **caractérisé en ce que** le séparateur de faisceau (1) est formé de sorte que le rapport des puissances lumineuses du faisceau lumineux (7) et de la lumière de mesure (23) est indépendant de la longueur d'onde du faisceau lumineux (7).

**8.** Microscope (33) avec une source lumineuse, qui émet un faisceau lumineux d'illumination (37) pour illuminer un échantillon (59), avec au moins un dispositif détecteur (63) pour détecter la lumière de détection (61) sortant de l'échantillon (59) et un dispositif pour déterminer la puissance lumineuse d'un faisceau lumineux d'illumination (37) avec un séparateur de faisceau (1) et un détecteur (11) associé au séparateur de faisceau (1), le séparateur de faisceau (1) séparant une lumière de mesure (23) du faisceau lumineux d'illumination (37) et la dirigeant vers le détecteur (11), **caractérisé en ce que** le séparateur de faisceau (1) et le détecteur (11) sont réunis en une unité et qu'un élément optique diffusif, comme une plaque de verre (21) rendue rugueuse ou un disque à verre dépoli (29), est prévu dans la trajectoire de faisceau de la lumière de mesure (23) pour que le détecteur (11) reçoive la lumière de mesure (23) avec une cohérence spatiale et/ou temporelle diminuée.

9. Microscope (33) selon la revendication 8, **caractérisé en ce que** le séparateur de faisceau (1) comprend un substrat (17, 29) qui présente une surface (21) diffusive ou se compose au moins partiellement de verre dépoli (29).

10. Microscope (33) selon l'une quelconque des revendications 8 ou 9, **caractérisé en ce que** l'unité présente un boîtier.

11. Microscope (33) selon l'une quelconque des revendications 8 à 10, **caractérisé en ce que** le détecteur (11) est disposé directement derrière le séparateur de faisceau (1).

12. Microscope (33) selon l'une quelconque des revendications 9 à 11, **caractérisé en ce que** le séparateur de faisceau (1) présente un revêtement (19, 31) qui est appliqué sur le substrat (17, 29).

13. Microscope (33) selon la revendication 8, **caractérisé en ce que** le rapport des puissances lumineuses du faisceau lumineux d'illumination (37) et de la lumière de mesure (23) est indépendant de la longueur d'onde du faisceau lumineux d'illumination (37).

14. Microscope (33) selon l'une quelconque des revendications 8 à 13, **caractérisé en ce que** le microscope (33) est un microscope à balayage ou un microscope à balayage confocal.

15. Procédé pour la microscopie **caractérisé par** les étapes suivantes :

   • détermination d'une puissance lumineuse d'un faisceau lumineux d'illumination (37) avec un dispositif, qui comprend un séparateur de faisceau (1) et un détecteur (11) associé au séparateur de faisceau (1), le séparateur de faisceau (1) séparant une lumière de mesure (23) du faisceau lumineux d'illumination (37) et la dirigeant vers le détecteur (11) et un élément optique diffusif, comme une plaque de verre (21) rendue rugueuse ou un disque à verre dépoli (29), étant prévu dans la trajectoire de faisceau de la lumière de mesure (23) pour que le détecteur (11) reçoive la lumière de mesure (23) avec une cohérence spatiale et/ou temporelle diminuée,

   • détermination d'une puissance lumineuse d'un faisceau lumineux de détection sortant d'un échantillon (59) et

   • détermination d'une puissance lumineuse corrigée par calcul de la puissance lumineuse du faisceau lumineux d'illumination (37) et de la puissance lumineuse du faisceau lumineux de détection.

16. Procédé selon la revendication 15, **caractérisé en ce que** la détermination de la puissance lumineuse du faisceau lumineux d'illumination (37) et du faisceau lumineux de détection se réalise simultanément.

17. Procédé selon la revendication 15, **caractérisé en ce que** la détermination de la puissance lumineuse du faisceau lumineux d'illumination (37) comprend un ajustement de décalage.

18. Procédé selon la revendication 15, **caractérisé en ce que** la détermination de la puissance lumineuse du faisceau lumineux de détection comprend un ajustement de décalage.

19. Procédé selon l'une quelconque des revendications 15 à 18, **caractérisé en ce que** la détermination comprend une étape de mise à l'échelle.

**EP 1 260 848 B1**

**9**

**Stand der Technik**

**<u>Fig. 1</u>**

**Fig. 2**

**Fig. 3**

**Fig. 4**

**Fig. 5**

**Fig. 6**